## Europäisches Patentamt
## European Patent Office
## Office européen des brevets

(19)

(11) Veröffentlichungsnummer : **0 173 078**
**B1**

(12)

# EUROPÄISCHE PATENTSCHRIFT

(45) Veröffentlichungstag der Patentschrift :
**19.10.88**

(51) Int. Cl.⁴ : **B 01 D   5/00, C 13 G   1/04**

(21) Anmeldenummer : **85109309.6**

(22) Anmeldetag : **24.07.85**

(54) Vorrichtung zur Kondensation von Brüden, insbesondere bei der Kristallisation von Zucker anfallenden Kochbrüden.

(30) Priorität : 25.07.84 DE 3427468

(43) Veröffentlichungstag der Anmeldung :
05.03.86 Patentblatt 86/10

(45) Bekanntmachung des Hinweises auf die Patenterteilung : 19.10.88 Patentblatt 88/42

(84) Benannte Vertragsstaaten :
**BE DE FR IT NL**

(56) Entgegenhaltungen :
CH-A-    480 855
DD-A-      85 542
DD-B-    139 977
DE-C-      13 407
DE-C-    686 899
DE-C- 1 025 833

(73) Patentinhaber : GEA Wiegand GmbH
Einsteinstrasse 9 - 15
D-7505 Ettlingen (DE)

(72) Erfinder : Töbe, Peter, Dipl.-Ing.
Meisenweg 5
D-7516 Karlsbad (DE)
Erfinder : Witte, Gustav, Dr.-Ing.
Hombergerstrasse 10
D-3583 Wabern (DE)
Erfinder : Herrmann, Karlheinz, Dipl.-Ing.
Pachwiesen 37
D-3583 Wabern (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

**Beschreibung**

Die Erfindung betrifft eine Vorrichtung nach dem Oberbegriff des Anspruchs 1.

Es ist bekannt, die bei der Kristallisation von Zucker anfallenden Kochbrüden in einem einstufigen Mischkondensator mit Kühlwasser zu kondensieren. Das bei der Kondensation erwärmte Kühlwasser (auch Fallwasser genannt) wird entweder in einen Fluß zurückgeleitet oder über eine Kühleinrichtung (einen Kühlturm, eine Sprühteich oder dergleichen) auf die ursprünglichen Zulaufbedingungen zurückgekühlt ; die vom Kühlwasser aufgenommene Kondensationswärme geht dadurch verloren.

Die in den letzten Jahren verstärkte Abwärmenutzung in den Zuckerfabriken führte u. a. dazu, auch die Kondensationswärme der Kochbrüden soweit wie möglich zu nutzen.

Das auf ca. 2 °C unterhalb der dem Kondensationsdruck entsprechenden Wassersiedetemperatur erwärmte Fallwasser (je nach Betriebsbedingungen ca. 54-59 °C) wird zu anderen Wärmeverbrauchern geleitet und dabei über Wärmetauscher (Rohrbündel- oder Plattenwärmetauscher) auf ca. 35-38 °C abgekühlt. Das abgekühlte Fallwasser wird dann wieder in den Kondensator zurückgeführt, so daß ein nahezu geschlossener Kühlwasserkreislauf entsteht (abgesehen von Verdunstungsverlusten).

Der geringe Abstand zwischen der dem Kondensationsdruck entsprechenden Wassersiedetemperatur und der Fallwasserablauftemperatur erfordert eine aufwendige Kondensatorkonstruktion (hier Vorkondensator genannt) sowie einen weiteren Kondensator (hier Nachkondensator genannt), um die nichtkondensierbaren Gase (Luft) abzukühlen, weiter Wasserdampf auszukondensieren und damit die Entlüftung zu entlasten. Darüberhinaus muß bei Betriebsstörungen der Nachkondensator einen Teil der Kondensation des Vorkondensators übernehmen. Vor Eintritt in den Vorkondensator werden die Kochbrüden durch einen Saftabscheider geleitet, um aus dem Kristallisator mitgerissene Safttropfen abzutrennen, damit das Kühlwasser nicht belastet wird. Eine gute Saftabscheidung ist umso wichtiger, wenn ein geschlossener Kühlwasserkreislauf gefahren wird.

In Zuckerfabriken mit der geschilderten Abwärmenutzung des Fallwassers sind bisher alle Apparate als Einzelapparate ausgeführt. In Fabriken mittlerer Größe (Kochbrüdenmenge ca. 45 t/h) ergeben sich dann z. B. folgende Größen :

Saftabscheider : DN 4 500 mm × 6 500 mm,
Vorkondensator : DN 3 000 mm × 8 000 mm,
Nachkondensator : DN 2 000 mm × 4 000 mm.
Alle Apparate sind untereinander durch Brüdenleitungen verbunden ; der Platzbedarf (Grundfläche) ist beträchtlich.

Die Druckverluste in den Brüdenleitungen bewirken eine niedrige Kondensationstemperatur und damit nur eine eingeschränkte Abwärmenutzungsmöglichkeit.

Aufgabe der Erfindung ist es, Abwärme auf einem höheren Temperaturniveau zu gewinnen, alle Einzelapparate in einer einzigen Vorrichtung zu integrieren, Grundfläche einzusparen und Brüdenleitungen zu sparen.

Die Lösung dieser Aufgabe ist im Kennzeichen des Anspruchs 1 angegeben.

In einem Ausführungsbeispiel ergibt sich bei einer Kochbrüdenmenge von ca. 45 t/h ein unterer Turmdurchmesser von 4,50 m sowie ein oberer Turmdurchmesser von 3,0 m ; die gesamte Länge des Turms beläuft sich auf 28,0 m. Durch die integrierte Bauweise wird also wesentlich Grundfläche eingespart, die in einer Fabrik erheblich höher bewertet wird als Bauhöhe. Die Höhe von ca. 28 m ist unproblematisch.

Die bisher erforderlichen verbindenden Brüdenleitungen entfallen ; dadurch wird der Druckverlust zwischen den Einzelapparaten beträchtlich reduziert, so daß ein höherer Kondensationsdruck möglich ist und damit eine höhere Fallwassertemperatur (besserer Wärmenutzung).

Neben diesen verfahrenstechnischen Vorteilen (bessere Abwärmenutzung durch höheren Kondensationsdruck) sind jedoch auch der geringe Preis (durch die kompakte Bauweise) und der geringe Platzbedarf zu beachten.

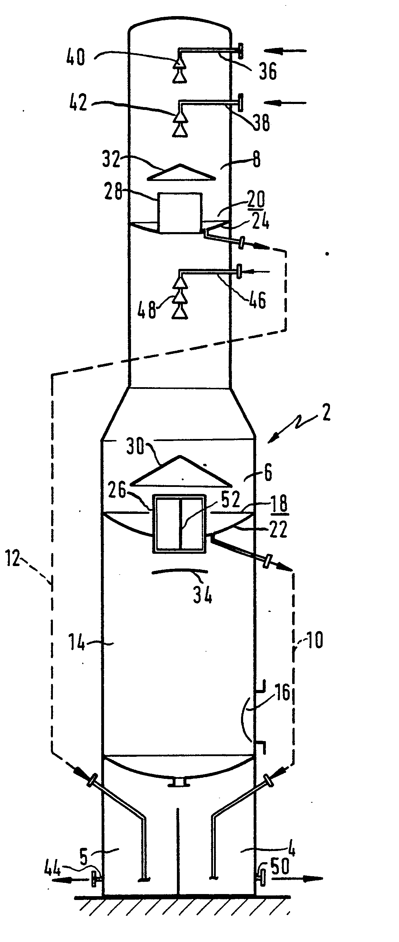

Die Erfindung wird im folgenden an einem Ausführungsbeispiel unter Hinweis auf die beigefügte Zeichnung beschrieben.

Die Zeichnung zeigt einen Turm 2, in dem von unten nach oben übereinander angeordnet sind Sammelbehälter 4, 5 (nebeneinander) für aus einem Vorkondensator 6 und einem Nachkondensator 8 über Leitungen 10, 12 abgeschiedenes Kühlwasser, ein Saftabscheider 14 mit einem tangentialen Eintrittsstutzen 16 für den Brüden, der Vorkondensator 6 und der Nachkondensator 8. Der Durchmesser des Turms 2 ist im Bereich der Sammelbehälter 4, 5 und des Saftabscheiders 14 größer als im Bereich des Vorkondensators 6 und des Nachkondensators 8. Der Vorkondensator 6 und der Nachkondensator 8 sind unten durch jeweils eine Ringwanne 18, 20 mit radial nach innen abschüssigem Boden 22, 24 zwischen der Innenfläche des Turms und einem zentralen Rohrstück 26, 28 begrenzt, über dem im Abstand eine Kappe 30, 32 angeordnet ist, die von oben auftreffendes Wasser in die Ringwanne 18 bzw. 20 leitet. Im Abstand unter dem zentralen Rohrstück 26 des Vorkondensators 6 ist eine unterseitig konkave Prallplatte 34 angeordnet.

In dem zentralen Rohrstück 26 ist ein Drallkreuz 52 angeordnet.

In den Nachkondensator 8 wird über zwei Leitungen 36, 38 Kühlwasser eingegeben und durch Verteiler 40, 42 versprüht. Das sich dabei in der Ringwanne 20 sammelnde Wasser wird über die Leitung 12 in den Sammelbehälter 5 geleitet und von dort über einen Auslaß 44 abgeführt.

In den Vorkondensator 6 wird über eine Leitung 46 Kühlwasser eingeführt und dort mittels eines Verteilers 48 versprüht. Das in der Ringwanne 18 gesammelte Kühlwasser gelangt über eine Leitung 10 in den Sammelbehälter 4 und wird von dort aus über einen Auslaß 50 abgeführt.

**Patentansprüche**

1. Vorrichtung zur Kondensation von Brüden, insbesondere bei der Kristallisation von Zucker anfallenden Kochbrüden, mit einem Vorkondensator (6), einem Nachkondensator (8) und einem Saftabscheider (14), gekennzeichnet durch einen Turm (2), in dem von unten nach oben Sammelbehälter (4, 5) für aus dem Vorkondensator (6) und dem Nachkondensator (8) abgeschiedenes Kühlwasser, der Saftabscheider (14) mit einem Eintrittsstutzen (16) für den Brüden, der Vorkondensator (6) und der Nachkondensator (8) angeordnet sind.

2. Vorrichtung nach Anspruch 1, dadurch gekennzeichnet, daß der Durchmesser des Turms (2) im Bereich der Sammelbehälter (4, 5) und des Saftabscheiders (14) größer ist als im Bereich des Vorkondensators (6) und des Nachkondensators (8).

3. Vorrichtung nach Anspruch 1 oder 2, dadurch gekennzeichnet, daß der Vorkondensator (6) und der Nachkondensator (8) unten durch jeweils eine Ringwanne (18, 20) zwischen der Innenfläche des Turms (2) und einem zentralen Rohrstück (26, 28) begrenzt sind, über dem im Abstand eine Kappe (30, 32) angeordnet ist.

4. Vorrichtung nach Anspruch 3, dadurch gekennzeichnet, daß im Abstand unter dem zentralen Rohrstück (26) des Vorkondensators (6) eine Prallplatte (34) angeordnet ist.

5. Vorrichtung nach Anspruch 4, dadurch gekennzeichnet, daß in dem zentralen Rohrstück (26) des Vorkondensators (6) ein Drallkreuz (52) angeordnet ist.

**Claims**

1. An apparatus for the condensation of vapours, in particular boiling vapours formed during the crystallisation of sugar, with a primary condenser (6), a secondary condenser (8) and a juice separator (14), characterised by a tower (2) in which there are arranged from the bottom upwards collecting vessels (4, 5) for cooling water separated from the primary condenser (6) and secondary condenser (8), the juice separator (14) with an inlet connection (16) for the vapours, the primary condenser (6) and the secondary condenser (8).

2. An apparatus according to Claim 1, characterised in that the diameter of the tower (2) in the vicinity of the collecting vessels (4, 5) and juice separator (14) is larger than in the vicinity of the primary condenser (6) and secondary condenser (8).

3. An apparatus according to Claim 1 or 2, characterised in that the primary condenser (6) and secondary condenser (8) are bounded at the bottom by respective annular troughs (18, 20) between the inner surface of the tower (2) and a central tubular portion (26, 28), above which and at a distance from which a cap (30, 32) is arranged.

4. An apparatus according to Claim 3, characterised in that a baffle (34) is disposed below the central tubular portion (26) of the primary condenser (6) at a distance therefrom.

5. An apparatus according to Claim 4, characterised in that a swirl cross (52) is disposed in the central tubular portion (26) of the primary condenser (6).

**Revendications**

1. Dispositif pour la condensation de vapeurs, en particulier de vapeurs d'ébullition se formant lors de la cristallisation du sucre, comportant un précondenseur (6), un post-condenseur (8) et un séparateur de jus (14), caractérisé par une tour (2), dans laquelle sont disposés de bas en haut des réservoirs de stockage (4, 5) pour l'eau de refroidissement extraite du précondenseur (6) et du post-condenseur (8), le séparateur de jus (14) avec un ajutage d'entrée (16) pour les vapeurs, le précondenseur (6) et le post-condenseur (8).

2. Dispositif suivant la revendication 1, caractérisé en ce que le diamètre de la tour (2) dans la région des réservoirs de stockage (4, 5) et du séparateur de jus (14) est plus élevée que dans la région du précondenseur (6) et du post-condenseur (8).

3. Dispositif suivant les revendications 1 ou 2, caractérisé en ce que le pré-condenseur (6) et le post-condenseur (8) sont limités tous deux au-dessous par une cuve annulaire (18, 20) entre la surface interne de la tour (2) et un tronçon de tuyau central (26, 28), sur lequel est disposé à distance un chapeau (30, 32).

4. Dispositif suivant la revendication 3, caractérisé en ce qu'une plaque de rebondissement (34) est disposée à distance au-dessous du tronçon de tuyau central (26) du précondenseur (6).

5. Dispositif suivant la revendication 4, caractérisé en ce qu'une croix de torsion (52) est disposée dans le tronçon de tuyau central (26) du précondenseur (6).